# EUROPEAN PATENT APPLICATION

(11) **EP 2 226 758 A1**
(43) Date of publication of application: **08.09.2010**
(21) Application number: 10250357.0
(22) Date of filing: 26.02.2010
(51) Int. Cl.: G06Q 30/00, G06F 3/01, G06F 3/048

(54) **Relationship analysis method, relationship analysis program, and relationship analysis apparatus**

(30) Priority: 03.03.2009 JP 2009048808
(71) Applicant: Hitachi, Ltd., Chiyoda-ku Tokyo 100-8280 (JP); Japan Tobacco, Inc., Tokyo 105-8422 (JP)
(72) Inventor: Suzuki, Yasuhiro, Chiyoda-ku Tokyo 100-8220 (JP); Yuyama, Shigeo, Chiyoda-ku Tokyo 100-8220 (JP); Sayama, Chiharu, Chiyoda-ku Tokyo 100-8220 (JP); Maki, Hideyuki, Chiyoda-ku Tokyo 100-8220 (JP); Watanabe, Hiroshi, Minato-ku Tokyo 105-8422 (JP)
(74) Representative: Calderbank, Thomas Roger

(57) **Abstract**

To obtain a high accuracy marketing analysis result, while reducing an effect of a low accuracy visual line detection processing, a storage unit of a visual line analysis apparatus stores therein, for each commodity, a basic zone including the commodity and an extended zone at least a portion of which is overlapped with the basic zone. The basic zone and the extended zone are stored in association with each other. An attention degree calculation part of the visual line analysis apparatus compares positional information on a visual line data detected by the visual line detection part and positional information on each zone defined in a zone definition data to calculate an attention degree for each zone, aggregates attention degrees in each zone for each commodity corresponding to the each zone, calculates an attention degree data for each commodity, and stores the calculated data in the storage unit.

## Description

The present invention relates to a relationship analysis method, a relationship analysis program, and a relationship analysis apparatus.

A user views an object such as a commodity. It is after looking at, for example, a commodity, that the user recognizes the commodity and considers a purchase of the same. Thus, information on a visual line of a user is effective as information indicating an interest of the user. Techniques of collecting information on a user's visual line have been proposed.

Japanese Laid-Open Patent Application, Publication No. 2007-286995 (to be referred to as Prior Art Document 1 hereinafter) discloses a technique in which, for each commodity, a zone including a displayed position of a commodity is set, and a visual line of a user which enters the zone is detected, to thereby measure an attention degree of the user to the commodity.

"Gaze Estimation with a Single Camera Using Facial Feature Tracking, Journal of Institute of Image Information and Television Engineers, vol. 61, No. 12, pp. 1750-1755 (2007) " (to be referred to as Prior Art Document 2 hereinafter) suggests existence of a detection error in detecting a visual line. For example, Prior Art Document 2 suggests that an estimated error in a visual line direction (or an angle) of about 9 (nine) degrees is caused depending on a subject.

Conventional POS (Point of sale) techniques utilize data such as a purchase history of a user in marketing. Such data can be obtained at a time when a user actually purchases a commodity. However, there are some processes prior to the actual purchase, such as recognition of the commodity and its comparison with others until user finally purchases the target commodity. Therefore, if data on such a process before the actual purchase can be collected as a marketing research, the data can be further made use of in a sales promotion of the commodity.

As shown in Prior Art Document 2, however, an accuracy of a conventional visual line detection processing is low, and a marketing operation based on the processing with the low accuracy is difficult. For example, in a visual line detection processing disclosed in Prior Art Document 1, a visual line is recognized by an image processing from a user's facial image taken by a camera. Thus a sufficient accuracy of the visual line detection cannot be obtained because conditions of taking an image by the camera such as blurring with a movement of a user and a shadow made by lighting greatly affect the detection.

As a result, in some cases, the visual line detection processing detects a commodity different from that actually viewed by a user. If such an incorrect detection result is used for an analysis, an incorrect analysis result is obtained.

Therefore, the present invention may provide a marketing analysis result of high accuracy while reducing an effect of a low accuracy visual line detection processing.

According to the present invention, there is provided a relationship analysis method performed by a relationship analysis apparatus that analyzes a relationship between a visual line data on a visual line of a user to a commodity and an action data on an action of the user of purchasing the commodity. In the relationship analysis method, the relationship analysis apparatus includes a storage part, a visual line detection part, an attention degree calculation part, an action processing unit, and an analysis processing unit. The storage part stores therein a zone definition data for identifying a commodity to which a visual line is directed, based on positional information on each commodity arranged in a commodity display part. The zone definition data includes, for each commodity, a basic zone including a commodity and an extended zone at least a portion of which is overlapped with the basic zone. The storage part stores therein the basic zone and the extended zone in association with each other. The visual line detection part detects the visual line data to each commodity arranged in the commodity display part. The attention degree calculation part compares, for each zone, positional information on the visual line data detected by the visual line detection part and positional information on each zone defined in a zone definition data, calculates an attention degree for each zone based on the compared result, aggregates attention degrees in each zone for each commodity corresponding to the each zone to calculate an attention degree data for each commodity, and stores the calculated data in the storage unit. The action processing unit receives an input of the action data with respect to each commodity arranged in the commodity display part and stores the received data in the storage unit. The analysis processing unit joins the attention degree data for each commodity and the action data for each commodity stored in the storage unit, calculates a correlative relationship between the both data, and outputs the calculated result.

The present invention may provide a marketing analysis result of high accuracy while reducing an effect of a low accuracy visual line detection processing.

In the Drawings:
FIG. 1 is a diagram illustrating a configuration of a visual line analysis apparatus according to an embodiment.
FIG. 2 is a diagram illustrating a configuration in which an automatic vending machine is used as the visual line analysis apparatus according to the embodiment.
FIG. 3 is a diagram illustrating a configuration in which the visual line analysis apparatus is disposed at a sales store according to the embodiment.
FIG. 4 is a diagram illustrating a hardware configuration of the visual line analysis apparatus according to the embodiment.
FIG. 5 is an explanatory diagram illustrating an example of a commodity display part according to the embodiment.
FIG. 6A and FIG. 6B are explanatory diagrams each illustrating an example of a visual line detection data storage part according to the embodiment.
FIG. 7A to FIG. 7C are explanatory diagrams each illustrating an example of a zone definition data storage part according to the embodiment.
FIG. 8A and FIG. 8B are explanatory diagrams each illustrating a definition of multiple zones in the zone definition data storage part according to the embodiment.
FIG. 9A to FIG. 9C are explanatory diagrams each illustrating a data structure of the zone definition data storage part according to the embodiment.
FIG. 10A and FIG. 10B are explanatory diagrams each illustrating an example of the visual line detection data storage part according to the embodiment.
FIG. 11 is a flowchart illustrating a processing performed by an attention degree calculation part according to the embodiment.
FIG. 12A to FIG. 12C are explanatory diagrams each illustrating details of a processing performed by the attention degree calculation part according to the embodiment.
FIG. 13A and FIG. 13B are explanatory diagrams each illustrating an example of an analysis result storage part according to the embodiment.
FIG. 14A to FIG. 14C are explanatory diagrams each illustrating another example of the analysis result storage part according to the embodiment.

Next is described an embodiment of a database system to which the present invention is applied with reference to related drawings.

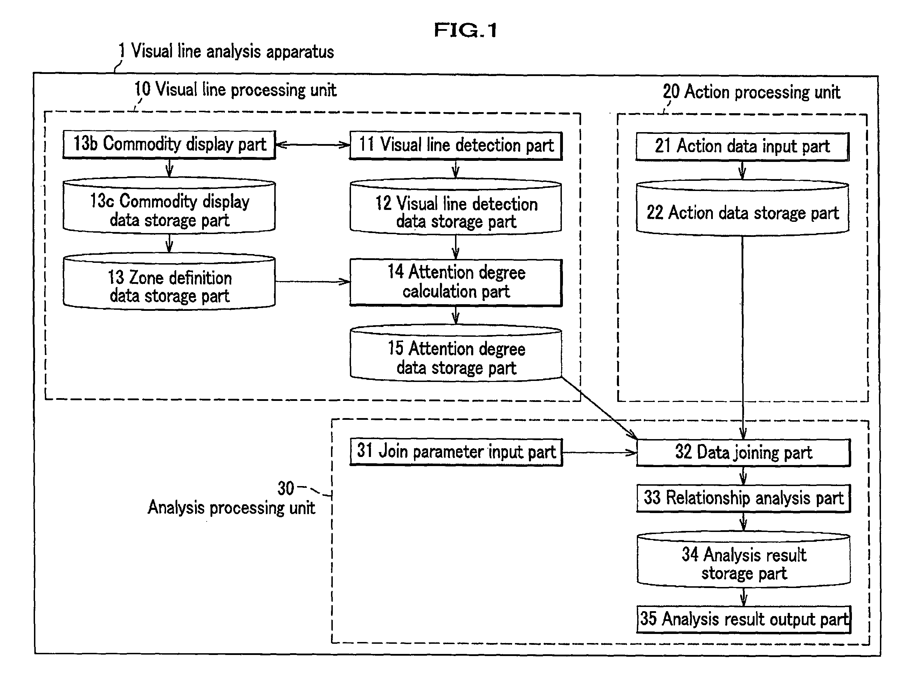

FIG. 1 is a diagram illustrating a configuration of a visual line analysis apparatus 1 (which may also be referred to as a relationship analysis apparatus).

The visual line analysis apparatus 1 includes a visual line processing unit 10, an action processing unit 20, and an analysis processing unit 30.

Note that the number of the visual line analysis apparatus 1 is not limited to one as shown in FIG. 1. Any number of units of the visual line analysis apparatuses 1 may be provided. For example, the present invention can be applied to a configuration in which 100 units of the visual line analysis apparatuses 1 are coupled to each other via a network, and data collected by the visual line analysis apparatuses 1 (for example, as data from an attention degree data storage part 15) is shared with each other via the network.

The visual line processing unit 10 includes a visual line detection part 11, a visual line detection data storage part 12, a zone definition data storage part 13, a commodity display part 13b, a commodity display data storage part 13c, an attention degree calculation part 14, and the attention degree data storage part 15.

The action processing unit 20 includes an action data input part 21 and an action data storage part 22.

The analysis processing unit 30 includes a join parameter input part 31, a data joining part 32, a relationship analysis part 33, an analysis result storage part 34, and an analysis result output part 35.

The visual line detection part 11 detects a position of a visual line of a user who is viewing the commodity display part 13b.

The visual line detection data storage part 12 stores therein a detection result of a visual line by the visual line detection part 11.

The zone definition data storage part 13 stores therein a definition of a zone based on arrangement of a commodity in the commodity display part 13b.

The commodity display part 13b displays one or more commodities which are expected to be purchased by the user.

The commodity display data storage part 13c stores therein positional information on the commodity arrangement in the commodity display part 13b.

The attention degree calculation part 14 calculates an attention degree of the user to (or a ratio of turning the user's visual line on) each commodity in the commodity display part 13b, based on data stored in the visual line detection data storage part 12 and the zone definition data storage part 13.

The attention degree data storage part 15 stores therein the attention degree as a calculation result by the attention degree calculation part 14.

The action data input part 21 receives an input of an action of the user (as a purchaser) of a commodity, such as a purchase operation, in the commodity display part 13b.

The action data storage part 22 stores therein the action of the user inputted from the action data input part 21.

The join parameter input part 31 receives an input of each parameter referenced in a join processing by the data joining part 32.

The data joining part 32 joins an attention degree of the user (of the attention degree data storage part 15) and an action of the user (of the action data storage part 22).

The relationship analysis part 33 analyzes a relationship between the user's attention degree and action, based on a join result by the data joining part 32.

The analysis result storage part 34 stores therein an analysis result by the relationship analysis part 33.

The analysis result output part 35 outputs a data stored in the analysis result storage part 34 to a user (as an analyst).

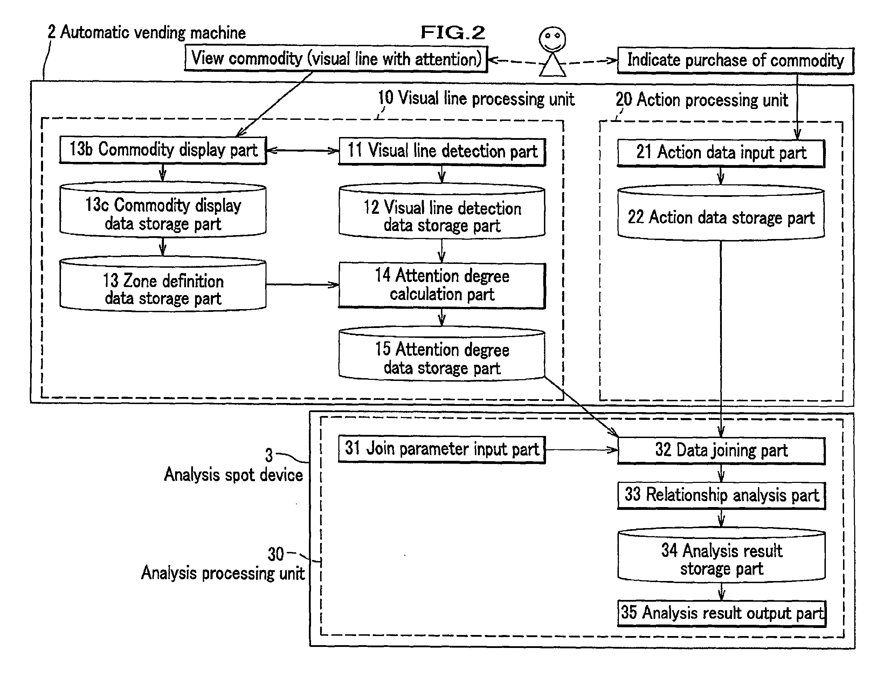

FIG. 2 is a diagram illustrating a configuration in which an automatic vending machine 2 is used as the visual line analysis apparatus 1.

The automatic vending machine 2 houses therein the visual line processing unit 10 and the action processing unit 20 of FIG. 1. An analysis spot device 3 having the analysis processing unit 30 is placed separately from the automatic vending machine 2. Note that the number of each of the automatic vending machine 2 and the analysis spot device 3 is not limited to 1 (one), as shown in FIG. 2. Any number thereof may be placed. For example, the present invention can be applied to a configuration in which 100 units of the automatic vending machine 2 are coupled to one unit of the analysis spot device 3 via a network.

The automatic vending machine 2 recognizes a session for each user who stops in front of the automatic vending machine 2 to consider purchase of a commodity. If a given user who has stopped to consider purchase of a given commodity at a given time, the user is assigned with the same session IDs both in a visual line detection result of the visual line detection part 11 and in a purchase history of the action data input part 21.

A session means a continuous time period from when a user starts to look at a commodity for a possible purchase until when the user stops looking at the commodity. A technique of distinguishing one session from another includes, for example, a processing of an image recognition of a person who is in front of the automatic vending machine 2, a processing of dividing sessions for each operation inputted in the automatic vending machine 2, and a processing of recognition by infrared ray consistently emitted toward the front of the automatic vending machine 2.

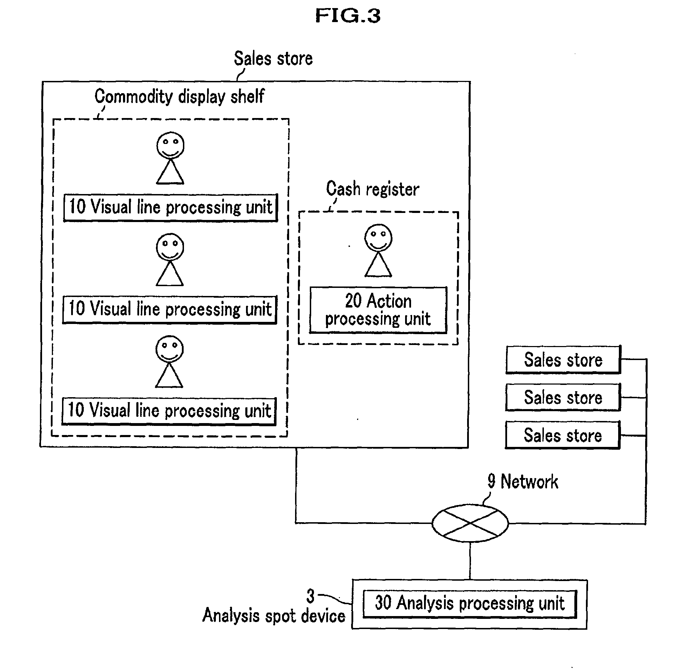

FIG. 3 is a diagram illustrating a configuration in which each component of the visual line analysis apparatus 1, namely, the visual line processing unit 10, the action processing unit 20, and the analysis processing unit 30, are separately disposed in different places in a sales store.

In the sales store, a commodity display shelf and a cash register are disposed apart from each other. A terminal having a configuration of the visual line processing unit 10 is disposed on the commodity display shelf. Another terminal having a configuration of the action processing unit 20 is disposed at the cash register.

In this case, unlike the automatic vending machine 2 of FIG. 2, it is difficult to associate a user who looks at a commodity in the commodity display part 13b of the visual line processing unit 10, with a user who pays for the commodity at the action processing unit 20. Therefore, the visual line detection result of the visual line detection part 11 cannot be associated with the purchase history of the action data input part 21 as a session.

The analysis spot device 3 collects a processing result from the visual line processing unit 10 and the action processing unit 20 via the network 9.

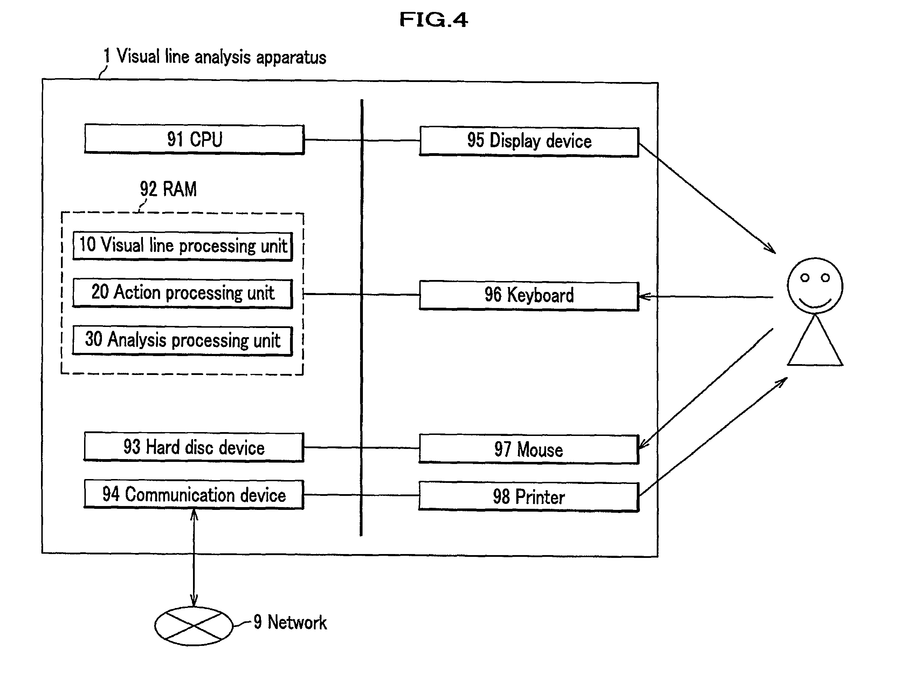

FIG. 4 is a diagram illustrating a hardware configuration of the visual line analysis apparatus 1 as an apparatus housed in one cabinet. The visual line analysis apparatus 1 is a computer including a CPU 91, a RAM 92, a hard disk device 93, a communication device 94, a display device 95, a keyboard 96, a mouse 97, and a printer 98.

The CPU 91 controls each component of the visual line analysis apparatus 1 by executing a program read in the RAM 92.

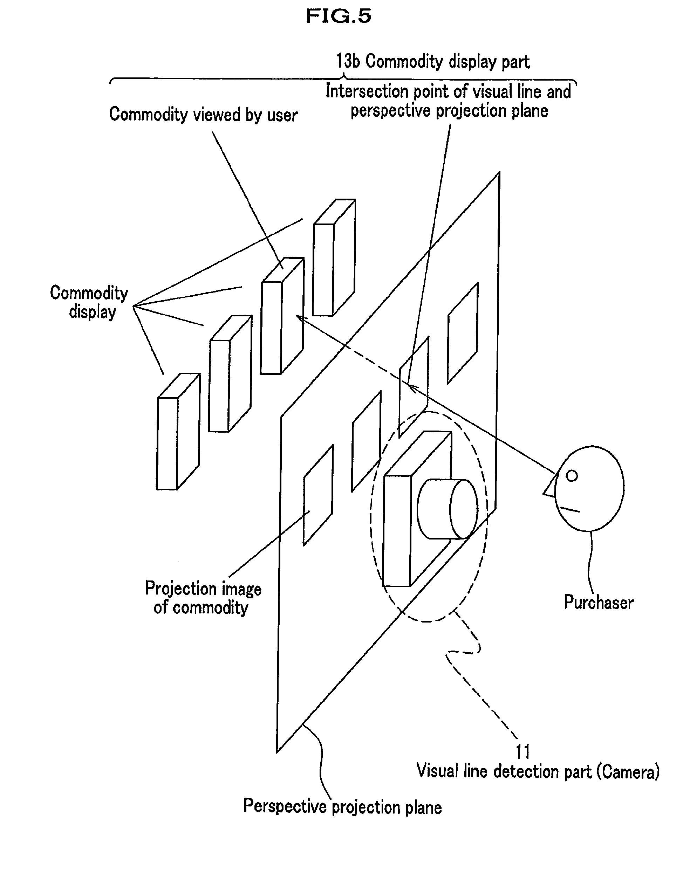

The RAM 92 stores therein a program for executing each of the processing units, that is, the visual line processing unit 10, the action processing unit 20, and the analysis processing unit 30. As described hereinafter with reference to FIG. 5, a camera for taking a face image of a user is coupled to the visual line detection part 11 of the visual line processing unit 10.

The hard disk device 93 stores therein data in the processing units 10, 20, 30 required for a processing performed by the CPU 91.

The communication device 94 is an interface for communicating with other device (for example, a user terminal not shown) via the network 9.

The display device 95 provides a user with a data by displaying the data.

The keyboard 96 receives a character entry from the user.

The mouse 97 receives an operation entry from the user.

The printer 98 provides the user with the data by printing out the data.

FIG. 5 is an explanatory diagram illustrating an example of the commodity display part 13b.

The commodity display part 13b displays thereon one or more commodities (four in FIG. 5). Note that the commodity arrangement may include an arrangement of not only a real commodity but also a three-dimensional mockup and a two-dimensional advertising poster. That is, any other commodity arrangement is available as far as the commodity arrangement is suitable for obtaining information for distinguishing one commodity from another.

A user (as a purchaser) looks at a displayed commodity via a perspective projection plane (for example, a commodity case of the automatic vending machine 2). Note that a visual line of a person is typically shown as information represented by a line. However, it is hereinafter assumed in this specification that the visual line is shown as information represented by a point. That is, the visual line is represented by an intersection point in a projection image of a commodity on a perspective projection plane with respect to the straight visual line (to be referred to hereinafter as a visual line point).

The visual line detection part 11 may be embodied by, for example, a camera disposed at a suitable position for taking an image of a full face of a user (a purchaser) so as to detect a position of a visual line of the user who is looking at the commodity display part 13b. In the technique of Prior Art Document 1, facial parts such as an eye and a nose are captured from a picture of a user's face taken by a camera, and a position and a direction of the captured eye is recognized, to thereby calculate a visual line of the user. Thus, the visual line detection part 11 detects the user's visual line by, for example, an image recognition processing of a picture of a user's face according to Prior Art Document 1.

The visual line detection part 11 may use a technique other than that of Prior Art Document 1 for improving a recognition rate. For example, if a purchaser-to-be is previously identified, calibration (a prior setting) specialized for the person can be performed, or an auxiliary data for recognition can be collected from a head set put on the person.

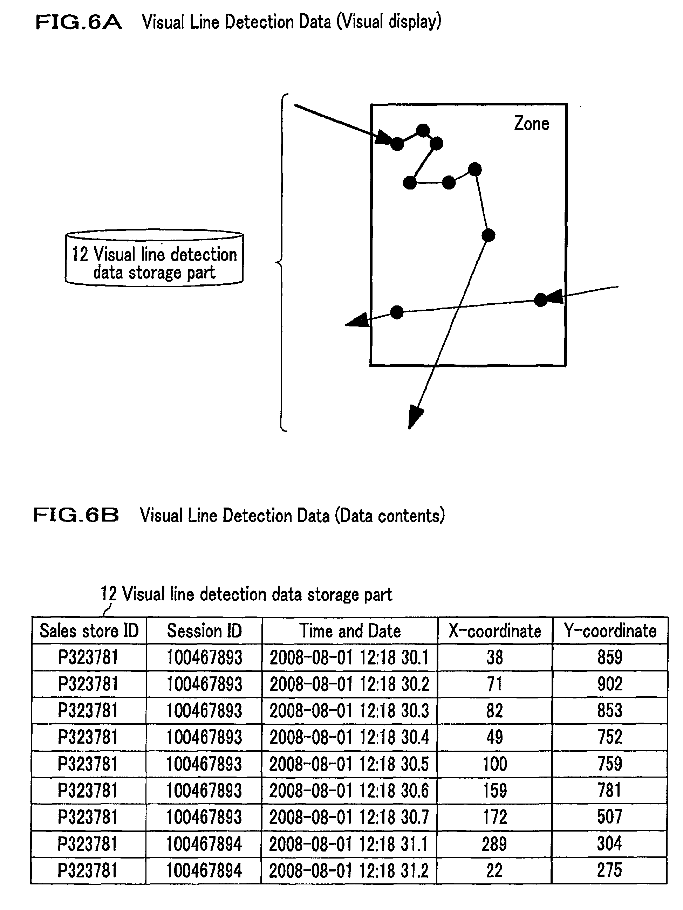

FIG. 6A and FIG. 6B are explanatory diagrams each illustrating an example of the visual line detection data storage part 12.

The visual line detection data storage part 12 stores therein data as a detection result by the visual line detection part 11. As shown in FIG. 6A, the data includes visual lines (indicated by filled circles) detected at each time and connected in time series. The visual line detection part 11 recognizes that a purchaser is looking at a commodity, if a visual line of the purchaser enters a zone previously registered in the zone definition data storage part 13. FIG. 6A shows that the purchaser has moved his/her visual line twice in the same zone (from when his/her visual line enters the zone till when his/her visual line goes out of the zone).

FIG. 6B shows that the visual line detection data storage part 12 stores therein contents of the data shown in FIG. 6A in table form. The visual line detection data storage part 12 manages a "sales store ID" which is an ID of a sales store in which the visual line analysis apparatus 1 is set up, a "session ID" which is an ID of a session recognized as a session of a target user by the visual line analysis apparatus 1, a "date and time" detected by the visual line detection part 11, and a point data position (an x-coordinate and a y-coordinate) of a target visual line at the date and time, in association with each other.

For example, in FIG. 6B, records each having a session ID "100467893" (from the first to the seventh record) correspond to a visual line movement entering upper left of the zone of FIG. 6A.

Similarly, in FIG. 6B, records each having a session ID "100467894" (two records from the bottom) correspond to another visual line movement entering lower right of the zone of FIG. 6A.

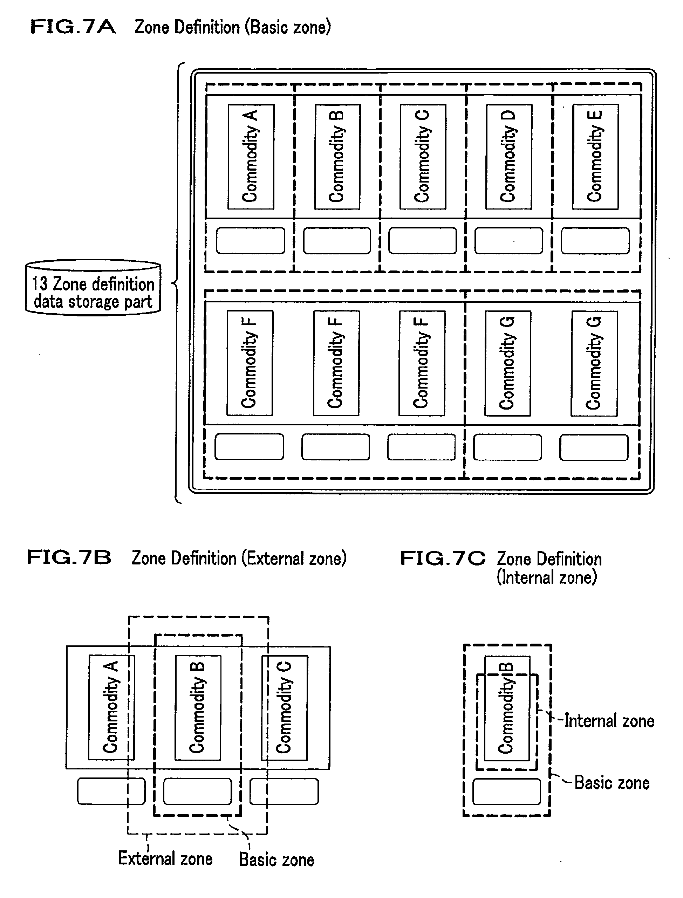

FIG. 7A to FIG. 7C are explanatory diagrams each illustrating an example of the zone definition data storage part 13. The zone definition data storage part 13 stores therein a data for defining a zone for each commodity. In FIG. 7A to FIG. 7C, description is made assuming that each zone is rectangular. However, the zone may have a round, oval, or any other shape.

FIG. 7A shows basic zones each including one or more commodities. The basic zone is defined such that one basic zone and another each having different commodities are not overlapped. Further, a space may be or may not be left between one basic zone and another. A plurality of basic zones having the same commodity may exist apart from each other.

As for Commodities A to E, one basic zone (indicated by a dotted rectangle) includes a single commodity.

As for Commodity F, one basic zone includes three commodities.

As for Commodity G, one basic zone includes two commodities.

FIG. 7B shows an external zone which includes a basic zone therein. The external zone is created by enhancing (or being derived from) a basic zone. For example, an external zone of Commodity B is defined from a basic zone thereof. The external zone is defined outward from a position of a commodity included in a corresponding basic zone. Thus, an external zone may overlap with other basic or external zone which includes a different commodity.

Definition of an external zone makes it possible to tolerate some margins of detection error. For example, if a purchaser is looking at Commodity B but the visual line detection part 11 erroneously recognizes that the purchaser's visual line is outside a basic zone of Commodity B due to an error, the visual line is expected to be correctly detected within a corresponding external zone.

FIG. 7C shows an internal zone which is included in a basic zone. The internal zone is also created by enhancing (or being derived from) a basic zone. For example, an internal zone of Commodity B is defined from a basic zone thereof. An internal zone may be defined anywhere as long as the internal zone is partly positioned within a corresponding basic zone. Thus, the internal zone may not include a position of a corresponding commodity.

Definition of an internal zone makes it possible to facilitate a correct detection of a commodity. For example, if a purchaser is looking at Commodity B and a detection result by the visual line detection part 11 is properly found within a basic zone of Commodity B, a visual line of the purchaser is expected to be found also within a corresponding internal zone.

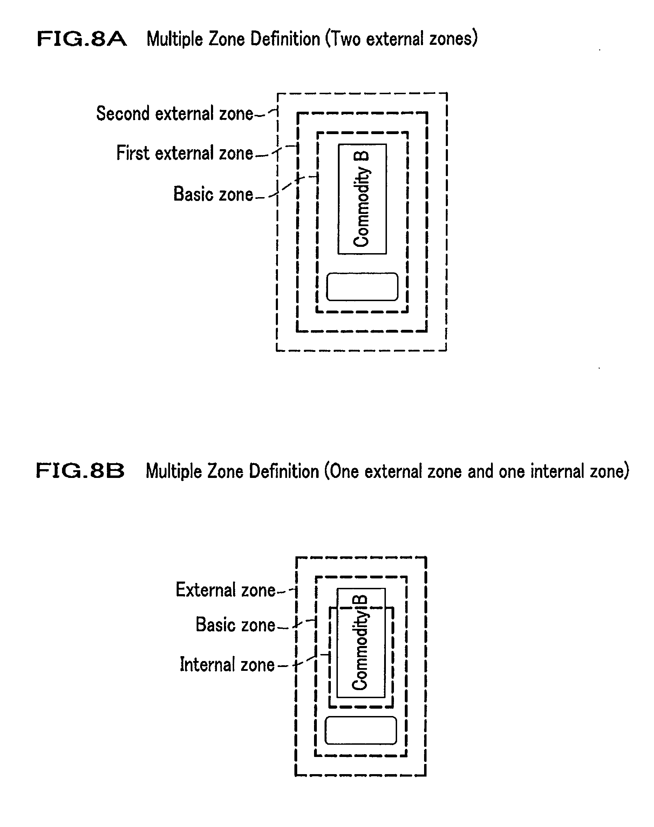

FIG. 8A and FIG. 8B are explanatory diagrams each illustrating a definition of multiple zones in the zone definition data storage part 13. The definition of multiple zones herein means that a plurality of extended zones are defined with respect to one basic zone.

In FIG. 8A, two external zones are defined with respect to one basic zone. A first external zone is an external zone including a basic zone. A second external zone is another external zone including the first external zone. In FIG. 8B, one external zone and one internal zone are defined with respect to one basic zone.

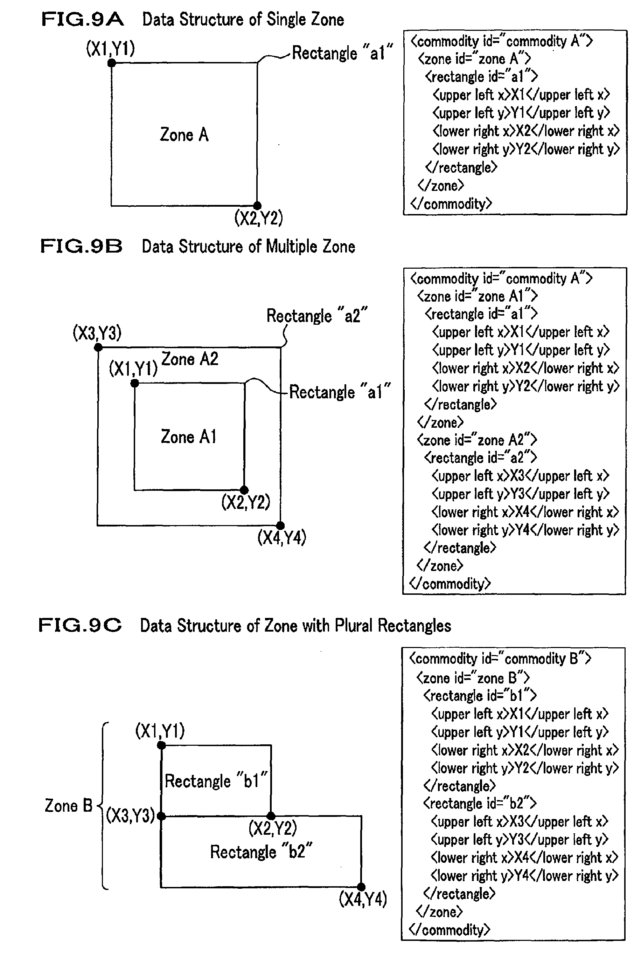

FIG. 9A to FIG. 9C are explanatory diagrams each illustrating a data structure of the zone definition data storage part 13. In each of FIG. 9A to FIG. 9C, a development view of a zone is provided on the left, and a text in a XML tree format of the data structure for creating the development view on the right.

In FIG. 9A, a zone (A) having a rectangle (a1) is defined with respect to Commodity A.

In FIG. 9B, two zones (A1, A2) having respective rectangles (a1, a2) are defined with respect to Commodity A.

In FIG. 9C, a zone (B) having two rectangles (b1, b2) are defined with respect to Commodity B.

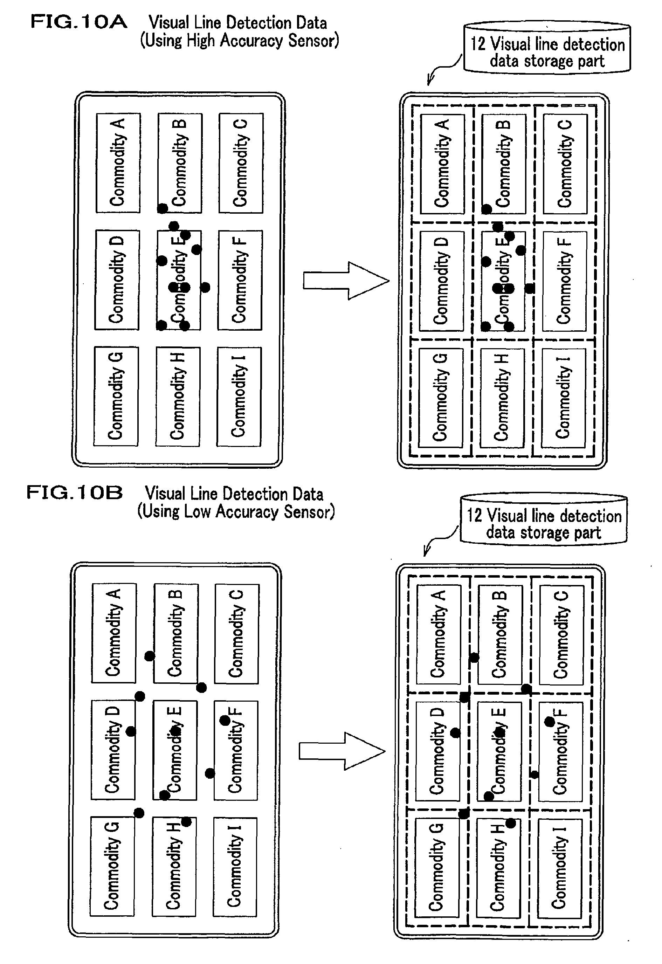

FIG. 10A and FIG. 10B are explanatory diagrams each illustrating an example of the visual line detection data storage part 12. In FIG. 10A and FIG. 10B, visual line points in the commodity display part 13b of the visual line detection data storage part 12 are shown without zones of the zone definition data storage part 13 on the left, and with the zones on the right. In FIG. 10A and FIG. 10B, it is assumed that a user looks at Commodity E.

FIG. 10A shows a detection result using a sensor of high accuracy as the visual line detection part 11. In this case, visual line points of a user are concentrated close to Commodity E as the user actually views Commodity E. Thus, almost all of the visual line points may be located within a basic zone of Commodity E.

FIG. 10B shows a detection result using a sensor of low accuracy as the visual line detection part 11. In this case, visual line points of the user are dispersed because an error of the low accuracy sensor negatively affects a detection result. A visual line may be detected in a position different from that actually viewed by the user. Thus, many of the visual line points may not be positioned within the basic zone of Commodity E. Such an error occurs because, for example, facial parts such as an eye are not correctly recognized owing to a user's continuous movement without a break, or a shadow made by lighting which prevents the facial parts from being captured appropriately.

**[Table 1]**

| 15 Attention degree data storage part | | | | | |
|---|---|---|---|---|---|
| Sales Store ID | Session ID | Attention Degree Commodity ID | Attention Degree | | |
| P323781 | 100467893 | Commodity A | 0.53 | | |
| P323781 | 100467893 | Commodity B | 0.26 | | |
| P323781 | 100467893 | Commodity C | 0.08 | | |

| 22 Action data storage part | | | | | |
|---|---|---|---|---|---|
| Sales Store ID | Session ID | Purchased Commodity ID | | | |
| P323781 | 100467893 | Commodity A | | | |
| P323781 | 100467894 | Commodity C | | | |
| P323781 | 100467895 | Commodity D | | | |

| 34 Analysis result storage part | | | | | |
|---|---|---|---|---|---|
| Sales Store ID | Session ID | Attention Degree Com. ID | Attention Degree | Purchased Com. ID | Purchase Flag |
| P323781 | 100467893 | Com. A | 0.53 | Com. A | 1 (Purchased) |
| P323781 | 100467893 | Com. B | 0.26 | Com. A | 0 (Not Purchased) |
| P323781 | 100467893 | Com. C | 0.08 | Com. A | 0 (Not Purchased) |

Table 1 shows detailed data in a configuration in which the automatic vending machine 2 is used as the visual line analysis apparatus 1. As described above with reference to FIG. 2, the automatic vending machine 2 can associate a viewer of a commodity with a purchaser thereof as the same person and assign a session ID to the same person.

The attention degree data storage part 15 of Table 1 manages a "sales store ID" which is an ID of a sales store in which the automatic vending machine 2 is set up, a "session ID" which represents a user, an "attention degree commodity ID" which is an ID of a commodity in the commodity display part 13b viewed by a user, and an "attention degree" of the commodity, in association with each other.

The action data storage part 22 of Table 1 manages a sales store ID as described above concerning in the attention degree data storage part 15, a session ID as described above, and a "purchased commodity ID" which is an ID of a commodity purchased by the user, in association with each other. If a user looks at but does not purchase a commodity, the "purchased commodity ID" of the user is set at "none". Note that a "purchase" is herein exemplified as a user's action. However, any other action in which a user acts on a commodity (for example, selection, searching, and ordering of the commodity) may be stored as a data on the action.

The analysis result storage part 34 of Table 1 stores therein a result of a join processing (SQL join operation) of data in the attention degree data storage part 15 and the action data storage part 22, performed by the data joining part 32. The analysis result storage part 34 manages therein a sales store ID, a session ID, an attention degree commodity ID, an attention degree, a purchased commodity ID, and a purchase flag, in association with each other. A combination of the sales store ID and a session ID is referred to as a join key.

The attention degree commodity ID and the attention degree are each a data extracted from the attention degree data storage part 15. The purchased commodity ID is a data extracted from the action data storage part 22.

The purchase flag is a flag computed after a join processing. The purchase flag is set at "1 (purchased)" if an attention degree commodity ID is identical with a purchased commodity ID in the same record. And, if not identical, the purchase flag is set at "0 (not purchased) ". The purchase flag is a parameter indicating a relationship between a visual line of a user and an action thereof.

**[Table 2]**

| 15 Attention degree data storage part | | | | | |
|---|---|---|---|---|---|
| Sales Store ID | Date and Time | Attention Degree Commodity ID | | Attention Degree | |
| E876369 | 2008-08-01 | Commodity A | | 267.8 | |
| E876369 | 2008-08-01 | Commodity B | | 375.2 | |
| E876369 | 2008-08-01 | Commodity C | | 483.9 | |

| 22 Action data storage part | | | | | |
|---|---|---|---|---|---|
| Sales Store ID | Date and Time | Purchased Commodity ID | | Number of Sales | |
| E876369 | 2008-08-01 | Commodity A | | 183 | |
| E876369 | 2008-08-01 | Commodity B | | 286 | |
| E876369 | 2008-08-01 | Commodity C | | 241 | |

| 34 Analysis result storage part | | | | | |
|---|---|---|---|---|---|
| Sales Store ID | Date and Time | Attention Degree Com. ID | Attention Degree | Purchased Com. ID | Number of Sales |
| E876369 | 2008-08-01 | Com. A | 267.8 | Com. A | 183 |
| E876369 | 2008-08-01 | Com. A | 267.8 | Com. B | 286 |
| E876369 | 2008-08-01 | Com. A | 267.8 | Com. C | 241 |
| E876369 | 2008-08-01 | Com. B | 375.2 | Com. A | 183 |

Table 2 shows detailed data in a configuration in which the visual line analysis apparatus 1 is disposed at a sales store. As described above with reference to FIG. 3, at a sales store, it is difficult to associate a viewer of a commodity with a purchaser thereof as the same person. Thus, statistical information per unit time (for example, per day) is used, instead of recognizing a session of each user. That is, in Table 1, a column of a join key corresponds to the "sales store ID & session ID". In Table 2, however, the column corresponds to the "sales store ID & date and time".

Herein, compare the attention degree data storage part 15 of Table 2 with that of Table 1. In Table 2, a date and time (a unit time of the statistical information) is used, instead of a session ID in Table 1. In Table 2, an attention degree is a total value (which may also be an average value) of attention degrees for each user at a corresponding date and time.

Compare the action data storage part 22 of Table 2 with that of Table 1. In Table 2, the date and time (a unit time of the statistical information) is used, instead of the session ID in Table 1. Further, a column of "the number of sales" is added to Table 2. The number of sales is a total number of commodities purchased by each user at a corresponding "date and time" and indicated by a purchased commodity ID.

Compare the analysis result storage part 34 of Table 2 with that of Table 1. In Table 2, the date and time (a unit time of the statistical information) is used, instead of the session ID in Table 1. The analysis result storage part 34 stores therein each column in Table 2 as a joined result.

In the analysis result storage part 34 of Table 2, a join key column is the "sales store & date and time". Basically, a record having a given "date and time" in the attention degree data storage part 15 is joined to a record having the same "date and time" in the action data storage part 22. In such a join processing, however, a prescribed slide margin may be added to the "date and time" of the attention degree data storage part 15. Thus, a record having a given "date and time" plus the "margin" in the attention degree data storage part 15 is joined to a record having the same "date and time" in the action data storage part 22. If the "date and time with a margin" is introduced, analysis can be advantageously made based on a time lag as a time for consideration by a user between when the user looks at or recognizes a commodity and when the user makes a decision (take an action) to purchase the commodity.

In this case, the join parameter input part 31 holds a previously-inputted "margin" in the hard disk device 93 and provides the "margin" to the data joining part 32 in the join processing.

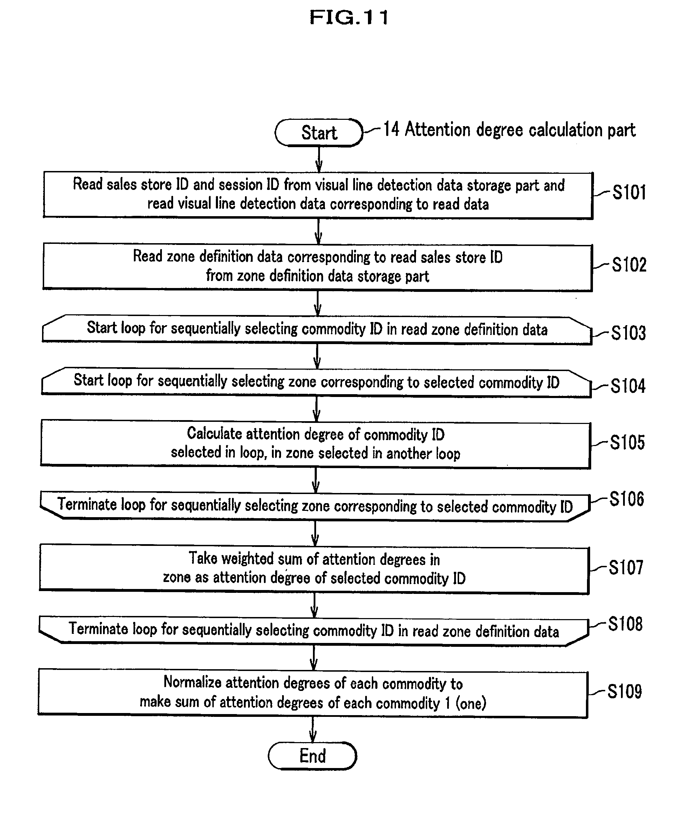

FIG. 11 is a flowchart illustrating a processing performed by the attention degree calculation part 14. Note that a plurality of zones (one basic zone and one or more extended zones) are set with respect to a single commodity. The attention degree calculation part 14 calculates respective attention degrees for each of a plurality of the zones set for the single commodity. The attention degree calculation part 14 then calculates an aggregated value of the attention degrees for each of the zones (for example, a weighted average value) into an attention degree with respect to the commodity. Next is described in detail a processing performed by the attention degree calculation part 14.

In S101, a sales store ID and a session ID are read from the visual line detection data storage part 12 (see FIG. 6B). A detection data corresponding to the read data (date and time, an x-coordinate, and a y-coordinate) is also read. In S102, a zone definition data corresponding to the sales store ID read in S101 is read from the zone definition data storage part 13 (see FIG. 7A).

In S103, a loop for sequentially selecting a commodity ID in the zone definition data read in S102 is started.

In S104, a loop for sequentially selecting a zone corresponding to the commodity ID selected in S103 is started.

In S105, an attention degree of the commodity ID selected in the loop from S103, in the zone selected in the loop from S104 is calculated. That is, attention degrees in a basic zone, an external zone, an internal zone of even the same commodity are calculated separately. In S105, the calculation is carried out using, for example, any one of the following calculation methods (1) to (3).

The calculation method (1) is based on a time period during which a visual line stays within a zone. A time period from when a visual line enters a zone till when the visual line goes out of the zone is taken as an attention degree of the zone. If the visual line enters and goes out of the zone more than once, a sum of the time periods is taken as the attention degree. However, if a time period between the entry and going-out is less than a prescribed threshold, the time period is excluded from the sum. This means that, if a visual line passes through a zone just for a moment, the visual line is not regarded as a target of the calculation.

The calculation method (2) is carried out if the calculation method (1) is performed to find that attention degrees of all commodities are null after excluding a time period between entry and going-out less than a prescribed threshold. The calculation method (2) recalculates the attention degrees using a threshold lower than the prescribed one.

The calculation method (3) is based on a velocity at which a visual line moves within a zone. If the lower an average velocity of a visual line movement in a zone (that is, the slowly the visual line moves), the higher attention degree is given.

In S106, the loop performed in S104 is terminated.

In S107, an aggregated value (a weighted sum, a weighted average value, or the like) of the attention degrees in the zone calculated in S105 is taken as an attention degree of the commodity having the commodity ID selected in S103. The aggregated value of the attention degrees is a sum of values obtained by multiplying an attention degree in each zone by a weight according to the each zone.

The weight set for each zone is stored in a storage means not shown. The weight is defined such that, for example, a higher weight is given to a zone nearer to the center of a displayed commodity. In other words, zones having higher weights in descending order are: an internal zone > a basic zone > an external zone. Instead of the aforementioned, an arbitrary weight may be given to the zones.

In S108, the loop performed in S103 is terminated.

In S109, the attention degrees of each commodity calculated in S107 are normalized to make a sum of the attention degrees of the each commodity 1 (one). More specifically, an attention degree of each commodity is divided by a sum of attention degrees of all the commodities to obtain a normalized attention degree of each commodity.

An attention degree of each commodity may be calculated based on a time period during which a user's visual line stays in a zone (that is, a denominator of the divisions described above). A sum of the time periods of all the zones is taken as 1 (one), and a ratio of the time period in each zone is calculated. In this case, the time period may include a time period during which a user's visual line does not stay in any of the zones (for example, the user is looking at his/her purse).

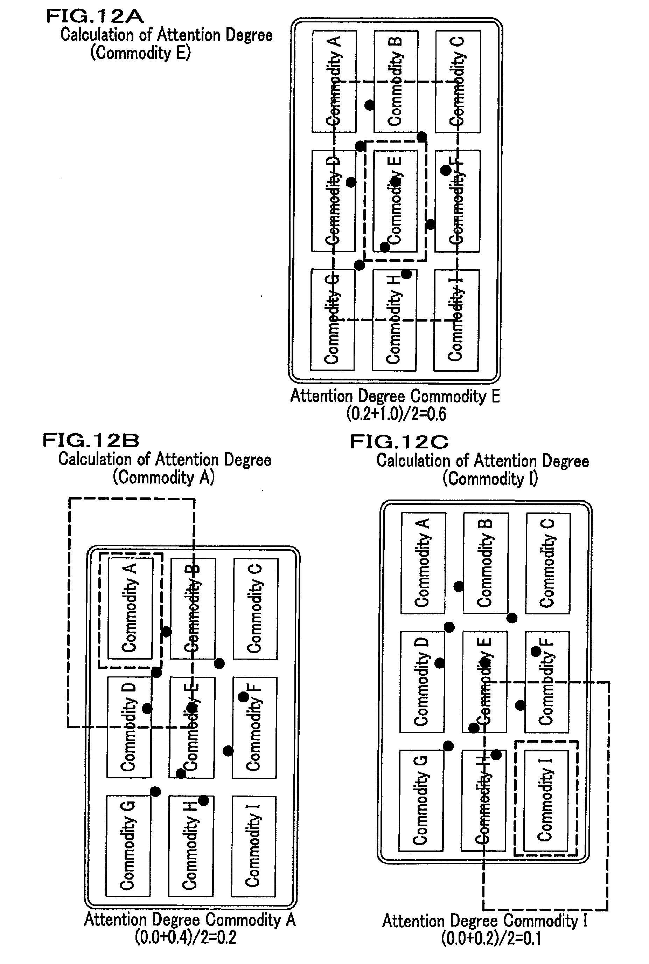

FIG. 12A to FIG. 12C are explanatory diagrams each illustrating details of the processing (S107, in particular) performed by the attention degree calculation part 14 shown in FIG. 11.

FIG. 12A shows a calculation step in S107, assuming that Commodity E is selected in S103. Two zones are set for Commodity E, and thus, the attention degree calculation step (S105) is conducted twice for each of the two zones. (In S105, calculation results of "0.2" and "1.0" are obtained.) In S107, the two calculation results are aggregated to obtain an averaged value of "0.6".

Similarly, in FIG. 12B and FIG. 12C, aggregated values of "0.2" and "0.1" are obtained respectively. Herein, compare three aggregated values shown in FIG. 12A to FIG. 12C. The aggregated value of "0.6" for Commodity E shown in FIG. 12A is the highest of the three. Even if some visual line points detected by the lower accuracy sensor miss the basic zone, as shown in FIG. 10B, a correct recognition result, which is "Commodity E", can be obtained because the external zone extends over the basic zone.

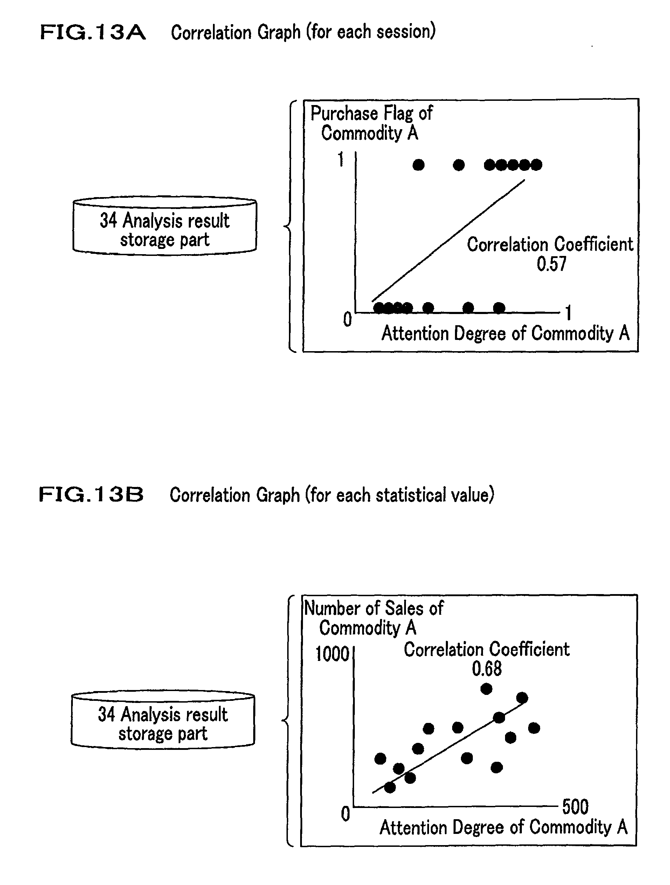

FIG. 13A and FIG. 13B are explanatory diagrams each illustrating an example of the analysis result storage part 34.

FIG. 13A shows an analysis result by the relationship analysis part 33 in the configuration with the automatic vending machine 2 (see FIG. 2 and Table 1). One point on the graph of FIG. 13A corresponds to one session. In the graph, the horizontal axis represents an attention degree for each commodity. The vertical axis represents a purchase flag for the each commodity. The graph indicates both a correlation coefficient of "0.57" between an attention degree and a purchase flag, and the correlation therebetween (a rising straight line from lower left to upper right). Note that the graph illustrates an example that commodities represented by the vertical and horizontal axes are the same. However, the commodities may be different from each other.

By referring to the analysis results, a correlative relationship can be obtained in which a commodity with a low attention degree (which is not looked at so much) has a tendency of not being purchased so much (a purchase flag of 0).

As described above, the relationship outputted by the relationship analysis part 33 between a visual line toward a commodity and a purchase of the commodity can be made use of as a marketing research. This is useful for commodity sales operations (or marketing) such as determination of a line of commodities, a planogram, a purchase plan, and a sales forecast.

FIG. 13B shows an analysis result in the configuration of purchasing a commodity at a sales store (see FIG. 3 and Table 2). In FIG. 13B, a session cannot be extracted, unlike in FIG. 13A. Thus, a point in the graph of FIG. 13B indicates a statistical value (the number of sales, for example) for each date and time.

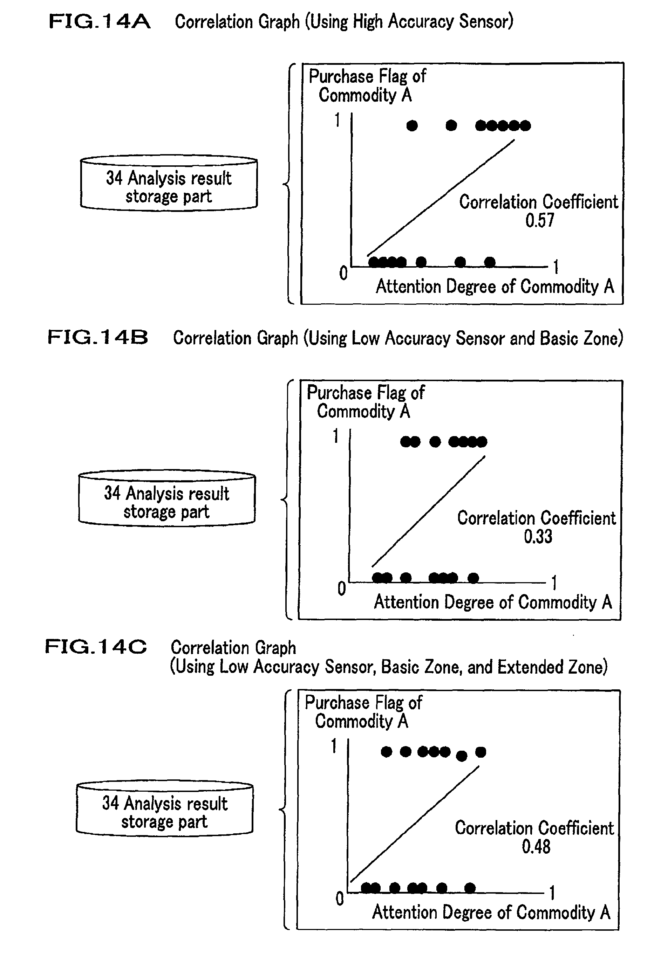

FIG. 14A to FIG. 14C are explanatory diagrams each illustrating another example of the analysis result storage part 34. Below is described that a calculation accuracy of the visual line detection part 11 affects an accuracy of a relational analysis by the relationship analysis part 33, with reference to FIG. 14A to FIG. 14C.

FIG. 14A shows an example in which a high accuracy sensor is used as the visual line detection part 11, as shown in FIG. 10A. Description below is made assuming that the correlation coefficient of "0.57" is taken as a correct value.

FIG. 14B shows an example in which a low accuracy sensor is used as the visual line detection part 11, and a visual line detection processing is performed using only a basic zone, as shown in FIG. 10B. Even if a user looks at Commodity A, an attention degree becomes lower due to an effect of an error of the low accuracy sensor. The obtained correlation coefficient is "0.33", which is far from the correct value of "0.57" of FIG. 14A.

FIG. 14C shows an example in which a low accuracy sensor is used as the visual line detection part 11, as shown in FIG. 10B, and a visual line detection processing is performed using, however, both a basic zone and an extended zone. The obtained correlation coefficient is "0.48", which is not so far from the correct value of "0.57" of FIG. 14A. This is because, even if a visual line point is recognized as being out of a basic zone due to an error, an extended zone can compensate for the error. This improves an accuracy of the correlation calculation, compared to that of FIG. 14B.

**[Table 3]**

| Com. ID | (a) High Accuracy Sensor | (b) Low Accuracy Sensor | (c) Low Accuracy Sensor & Enhanced Zone | (d) Normalization of (c) |
|---|---|---|---|---|
| Com. A | 0.0 | 0.0 | 0.2 | 0.08 |
| Com. B | 0.1 | 0.2 | 0.4 | 0.15 |
| Com. C | 0.0 | 0.0 | 0.15 | 0.06 |
| Com. D | 0.0 | 0.2 | 0.4 | 0.15 |
| Com. E | 0.9 | 0.2 | 0.6 | 0.23 |
| Com. F | 0.0 | 0.2 | 0.35 | 0.13 |
| Com. G | 0.0 | 0.1 | 0.2 | 0.08 |
| Com. H | 0.0 | 0.1 | 0.25 | 0.09 |
| Com. I | 0.0 | 0.0 | 0.1 | 0.04 |

Table 3 is used for comparing calculation results (attention degrees for each commodity) in the attention degree data storage part 15. Columns (a) to (c) of Table 3 correspond to cases shown in FIG. 14A to FIG. 14C, respectively.

There is a large difference between the correct value in column (a) using the high accuracy sensor and the calculated value in column (b) using the low accuracy sensor (especially, for Commodity E). However, even if the low accuracy sensor is used, the calculated value in column (d) is improved, because an extended zone is used.

According to this embodiment as described above, in the visual line analysis apparatus 1, the calculation part 14 calculates an attention degree for each commodity, based on a visual line data as a detection result by the visual line detection part 11. In the calculation, not only a basic zone but also an extended zone which is enhanced from the basic zone stored in the zone definition data storage part 13 are used. This enables a high accuracy calculation of an attention degree, even if a detection accuracy of the visual line detection part 11 is low.

Therefore, the analysis processing unit 30 can analyze relationship between an attention degree and an action of a user, making use of the calculated attention degree in high accuracy and an action data from the action processing unit 20, as input parameters. The analysis processing unit 30 can thus output a high accuracy analysis result.

The number of units or a configuration of the visual line analysis apparatus 1 in this embodiment described above are not limited to those shown in FIG. 1 to FIG. 4, and may be modified where necessary.

## Claims

1. A relationship analysis method performed by a relationship analysis apparatus that analyzes a relationship between a visual line data on a visual line of a user to a commodity and an action data on an action of the user of purchasing the commodity,
wherein the relationship analysis apparatus comprising a storage part, a visual line detection part, an attention degree calculation part, an action processing unit, and an analysis processing unit,
wherein the storage part stores therein a zone definition data for identifying a commodity to which a visual line is directed, based on positional information on each commodity arranged in a commodity display part; the zone definition data includes, for each commodity, a basic zone including a commodity and an extended zone at least a portion of which is overlapped with the basic zone; and the storage part stores therein the basic zone and the extended zone in association with each other,
wherein the visual line detection part detects the visual line data to each commodity arranged in the commodity display part,
wherein the attention degree calculation part compares, for each zone, positional information on the visual line data detected by the visual line detection part and positional information on each zone defined in a zone definition data, calculates an attention degree for each zone based on the compared result, aggregates attention degrees in each zone for each commodity corresponding to the each zone to calculate an attention degree data for each commodity, and stores the calculated data in the storage unit,
wherein the action processing unit receives an input of the action data with respect to each commodity arranged in the commodity display part and stores the received data in the storage unit, and
wherein the analysis processing unit joins the attention degree data for each commodity and the action data for each commodity stored in the storage unit, calculates a correlative relationship between the both data, and outputs the calculated result.

2. The relationship analysis method according to claim 1,
wherein the visual line detection part detects the visual line data by detecting eye parts from a user's facial image taken by a camera set up in the commodity display part.

3. The relationship analysis method according to claim 2,
wherein, if the analysis processing unit performs a join of the attention degree data and the action data, the analysis processing unit joins the attention degree data and the action data having the date and time same as the attention degree data.

4. The relationship analysis method according to claim 2,
wherein, if the analysis processing unit performs a join of the attention degree data and the action data, the analysis processing unit joins the attention degree data having a given date and time and the action data having the given date and time with a prescribed margin.

5. The relationship analysis method according to claim 2,
wherein the relationship analysis apparatus is configured as an automatic vending machine having a means of purchasing each commodity arranged in the commodity display part, and
wherein the action processing unit receives an input of a purchase history data of each commodity as the action data with respect to each commodity.

6. The relationship analysis method according to claim 5,
wherein, if the analysis processing unit performs a join of the attention degree data and the action data, the analysis processing unit joins the attention degree data of a given user who is in front of the automatic vending machine at a given time and the action data of the given user.

7. The relationship analysis method according to claim 6,
wherein the relationship analysis apparatus stores at least one of an external zone including a basic zone for a given commodity and an internal zone included in the basic zone for the given commodity, both as the extended zones in the zone definition data, in the storage unit.

8. The relationship analysis method according to claim 7,
wherein the relationship analysis apparatus associates a weight with each of a plurality of zones which is associated with a given commodity in the zone definition data and stores the associated weight and zone in the storage unit, and
wherein, if the attention degree calculation part aggregates attention degrees in each zone for each commodity to calculate an attention degree data for each commodity, the attention degree calculation part calculates the attention degree data for each commodity using a weighting processing in which the attention degree of each zone is multiplied by the weight stored in the storage unit.

9. A relationship analysis program that causes the relationship analysis apparatus as a computer to execute the relationship analysis method according to any one of claims 1 to 8.

10. A relationship analysis apparatus that analyzes a relationship between a visual line data on a visual line of a user to a commodity and an action data on an action of the user of purchasing the commodity,
wherein the relationship analysis apparatus comprising a storage part, a visual line detection part, an attention degree calculation part, an action processing unit, and an analysis processing unit,
wherein the storage part stores therein a zone definition data for identifying a commodity to which a visual line is directed, based on positional information on each commodity arranged in a commodity display part; the zone definition data includes, for each commodity, a basic zone including a commodity and an extended zone at least a portion of which is overlapped with the basic zone; and the storage part stores therein the basic zone and the extended zone in association with each other,
wherein the visual line detection part detects the visual line data to each commodity arranged in the commodity display part,
wherein the attention degree calculation part compares, for each zone, positional information on the visual line data detected by the visual line detection part and positional information on each zone defined in a zone definition data, calculates an attention degree for each zone based on the compared result, aggregates attention degrees in each zone for each commodity corresponding to the each zone to calculate an attention degree data for each commodity, and stores the calculated data in the storage unit,
wherein the action processing unit receives an input of the action data with respect to each commodity arranged in the commodity display part and stores the received data in the storage unit, and
wherein the analysis processing unit joins the attention degree data for each commodity and the action data for each commodity stored in the storage unit, calculates a correlative relationship between the both data, and outputs the calculated result.
